Europäisches Patentamt

European Patent Office

Office européen des brevets

(19)

(11) Veröffentlichungsnummer: **0 370 298**

**A1**

(12) **EUROPÄISCHE PATENTANMELDUNG**

(21) Anmeldenummer: **89120571.8**

(22) Anmeldetag: **07.11.89**

(51) Int. Cl.5: **F16H 3/52, F16H 3/66, B60K 17/08**

(30) Priorität: **08.11.88 DE 3837778**

(43) Veröffentlichungstag der Anmeldung:
**30.05.90 Patentblatt 90/22**

(84) Benannte Vertragsstaaten:
**AT DE ES FR GB IT**

(71) Anmelder: **Klöckner-Humboldt-Deutz Aktiengesellschaft
Deutz-Mülheimer-Strasse 111 Postfach 80 05 09
D-5000 Köln 80(DE)**

(72) Erfinder: **Zenker, Walter
Pippelstein 49
D-5060 Bergisch Gladbach(DE)**

(54) **Mehrfachlastschaltung für ein Fahrzeug.**

(57) Anordnung eines Mehrfachlastgetriebes in einem Schaltgetriebe.

Lastschaltungen, aufgebaut mit mindestens einem Planetengetriebe, deren einzelne Bauteile in Abhängigkeit einer gewünschten Übersetzung abgebremst bzw. gekuppelt werden, verlangen einen Bauraum, der vielfach nicht in einem vorgegebenen Getriebegehäuse vorhanden ist.

Zur Verbesserung der kompakten Bauweise kommen Planetenstandgetriebe (10, 11) zur Anwendung, die mit allen zugehörigen Bauteilen zu einer Lastschaltgetriebeeinheit (5) zusammengefaßt sind, die wiederum von zwei Gehäusen (6, 7) umschlossen ist. Zur Vermeidung der Variantenvielzahl der einzelnen benötigten Bauteile und zur Kostenminimierung ist eine spiegelbildliche Anordnung der Planetenstandgetriebe (10, 11) in der Lastschaltgetriebeeinheit (5) vorgesehen.

Die vorgestellte Mehrfachlastschaltung ermöglicht einen einfachen Austausch der kompletten Lastschaltgetriebeeinheit und benötigt außerdem kein Überschneidungsventil für die hydraulische Ansteuerung der zusammenwirkenden Lamellenbremse und Lamellenkupplung.

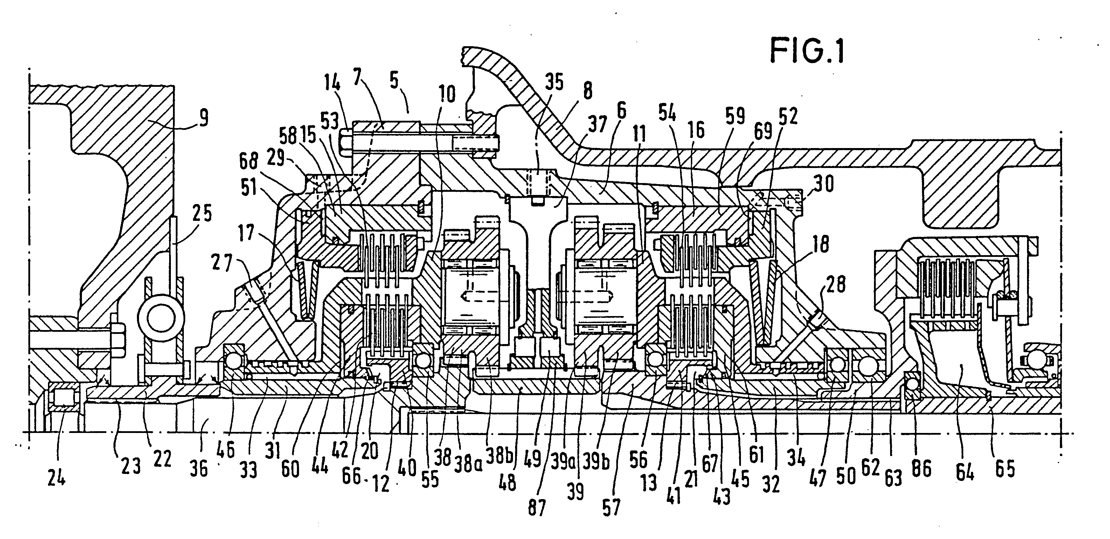

Der Fig. 1 ist eine im Halbschnitt dargestellte Mehrfachlastschaltung entnehmbar, deren Lastschaltgetriebeeinheit (5) als Einschubeinheit in ein Getriebegehäuse (8) ausgebildet ist.

FIG.1

KHD AG D88/51

## Mehrfachlastschaltung für ein Fahrzeuggetriebe

Die Erfindung bezieht sich auf ein Lastschaltgetriebe nach dem Oberbegriff des ersten Anspruchs.

Eine Lastschaltung zeichnet sich dadurch aus, daß ein Schalten ohne Zugkraftunterbrechung, d. h. ohne Halten möglich wird. Beim Einsatz von Schleppern für landwirtschaftliche Arbeiten treten häufig Schwankungen im Zugkraftbedarf auf. Ein Lastschaltgetriebe gibt in einem solchen Fall dem Fahrer die Möglichkeit bei auftretenden größeren Zugwiderständen die Fahrgeschwindigkeit zu vermindern, um dadurch die Zugkraft zu steigern, ohne den Leistungsfluß zu unterbrechen und vom Antriebsmotor einen größeres Drehmoment zu verlangen. Die Zugkraftsteigerung soll vielmehr unabhängig von der vorhandenen Drehmomentreserve des Motors, die durch Abfall der Nenndrehzahl wirksam wird, zusätzlich anwendbar sein.

Der Erfindung liegt die Aufgabe zugrunde, eine Mehrfachlastschaltung darzustellen, die kompaktbauend eine Vielzahl von Gleichteilen aufweist und als Einschubeinheit ausgebildet ist.

Erfindungsgemäß wir die Aufgabe durch die kennzeichnenden Merkmale des ersten Anspruchs gelöst. Durch die Verwendung eines Planetenstandgetriebes, welches keinen das Planetengetriebe umschließenden Zahnkranz aufweist, wird vorteilhaft weniger Bauraum beansprucht und zudem verringert sich der erforderliche Bauteileumfang. Die erfindungsgemäße Lastschaltung ist weiter so aufgebaut, daß alle zu jedem einzelnen Planetenstandgetriebe benötigten Einzelteile mit Ausnahme der Planetenräder baugleich sind, wodurch vorteilhaft eine kostengünstige Darstellung der Lastschaltung erzielbar ist aufgrund von geringen Unterschiedsteilen. Durch die Verwendung von federkraftbeaufschlagten (federkraftgeschlossenen) Lamellenbremsen wird erreicht, daß diese in der Neutralstellung, d. h. ohne Druckbeaufschlagung, geschlossen sind. Die federbeaufschlagten Lamellenbremsen zeichnen sich weiter vorteilhaft dadurch aus, daß bei Anfall der Elektrik und oder der Hydraulik dennoch ein Kraftschluß zwischen uem Motor und dem Antrieb vorhanden ist. Ebenso bleibt der Kraftschluß bei Stillstand des Motors erhalten, aus Sicherheitsgründen ist diese Tatsache von großer Bedeutung. Durch die mit der Lamellenbremse in Wirkverbindung stehende und gleichzeitig betätigte Lamellenkupplung wird eine zueinander entgegengesetzte Stellbewegung erreicht, wobei vorteilhaft auf ein üblicherweise verwendetes Überschneidungsventil verzichtet werden kann, da durch die federkraftbeaufschlagte Lamellenbremse eine ausreichende "Überschneidung" zwischen der Lamellenbremse und Lamellenkupplung während der Drehmomentübertragung erreichbar und damit ein ruckfreier, ungewollte Schaltstöße vermeidender Wechsel der Schaltstufen möglich wird. Damit die durch den Wechsel der Schaltstufe verbundene Drehmomentänderung möglichst ruckfrei erfolgen kann, hat das Überschneidungsventil die Aufgabe, die Schaltung der Lamellenkupplung bzw. Lamellenbremse so vorzunehmen, daß der Kraftfluß zwischen den zu schaltenden Komponenten möglichst im Bereich des maximalen Drehmoments der Antriebsmaschine erfolgt. Bei der vorliegenden Erfindung wird die Ventilfunktion durch das zuvor erläuterte Zusammenwirken von Lamellenbremse und Lamellenkupplung erreicht.

Die zur Anwendung kommende erfindungsgemäßen federkraftbeaufschlagten, d. h. federkraftgeschlossenen Lamellenbremsen sind so ausgelegt, daß deren Federglieder eine Federkonstante aufweisen, durch die die Drehmomentübernahme für die der mit den Lamellenbremsen bzw. Lamellenkupplungen zugehörigen Bauteile so erfolgt, daß der Überschneidungspunkt, zwischen dem das Drehmoment abgebenden auf das das Drehmoment übernehmenden Bauteil im Bereich des maximalen Drehmoments der Antriebsmaschine bzw. möglichst uunterhalb diesem gelagert ist zur Erreichung eines möglichst ruckfreien Fahrens in den einzelnen Schaltstufen.

Die jeweils gleichzeitig schaltbare Lamellenbremse und Lamellenkupplung, die zu einem Planetenstandgetriebe gehören, wird durch die in Neutralstellung Federkraft geschlossene Lamellenbremse ermöglicht. Durch diese Anordnung werden die Druckräume der Lamellenbremse und Lamellenkupplung druckbeaufschlagt werden und damit eine Lüftung der Bremse und ein Schließen der Kupplung erreicht bzw. beim Druckabbau eine Umkehr der Stellbewegung von Kupplung und Bremse.

Die kompakte Bauart unterstreichend sind die beiden Planetenstandgetriebe der vorliegenden Vierfachlastschaltung spiegelbildlich angeordnet, wodurch vorteilhaft die Planetenräder der einzelnen Planetenstandgetriebe eng neben einander anzuordnen sind und die von den Planetenrädern jeweils nach außen zeigenden Planetenradträger vorteilhaft auf der Antriebs- bzw. Abtriebswelle gelagert werden können.

Durch die kompakte Bauart ergibt sich die Möglichkeit, die gesamte Lastschaltung zu einer Lastschaltgetriebeeinheit zusammenzufügen, das von einem Gehäuse umschlossen ist. Dieser Aufbau gestattet es, die Lastschaltgetriebeeinheit als Einschubeinheit auszubilden und damit im Schadensfall einen schnellen Austausch und damit eine schnelle Raparatur der Lastschaltung bzw. des Lastschaltgetriebes zu erreichen mit einer geringen Ausfallzeit des Fahrzeugs. In einer weiteren Ausgestaltung der Erfindung ist vorgesehen, die Lastschaltgetriebeeinheit nachrüstbar auszubilden, wodurch vorteilhaft ein Standardgetriebe im Bedarfsfall unter Berücksichtigung der gegebenen Einbauverhältnisse (Getriebgehäuse) mit einer Lastschaltung nachgerüstet werden kann.

Eine weiterer Erfindungsgedanke sieht vor, daß die Lastschaltgetriebeeinheit innerhalb des Getriebegehäuses vor der Fahrkupplung angeordnet ist. Dieser Aufbau wirkt sich günstig auf die zuvor angesprochene schnelle Austauschbarkeit der kompletten Lastschaltgetriebeeinheit aus, da in diesem Fall zum Austausch der Lastschaltgetriebeeinheit lediglich die Befestigungsschrauben sowie die Druckmittel- und elektrischen Leitungen gelöst werden müssen. Außerdem wird die Synchronisierung für das Schaltgetriebe entlastet aufgrund der kleineren Massenanordnung durch die vor der Fahrkupplung angeordnete Lastschaltgetriebeeinheit.

Zur Erreichung einer schnellen Montage und Demontage der kompletten Lastschaltgetriebeeinheit sieht die Erfindung weiter vor, daß die erforderlichen Druckmittelanschlüsse zur Betätigung der Lamellenkupplung bzw. Lamellenbremse, in dem die Planetenstandgetriebe umschließende Gehäuse integriert sind, wodurch vorteilhaft alle zur Befestigung und Betätigung erforderlichen Anschlüsse bzw. Verschraubungen auf der Vorderseite der Lastschaltgetriebeeinheit angeordnet sind.

Die Vielseitigkeit der vorgestellten Lastschaltung unterstreichend ist weiter vorgesehen, die vorgestellte Lastschaltung als Zweifachlastschaltung (High Low-Schaltung) auszubilden, wie sie vielfach für Splitgruppen zur Anwendung kommt.

Ferner bietet sich an, die federkraftbeaufschlagten Lamellenbremsen mit Tellerfedern zu versehen, die für die einzelne Lamellenbremse unterschiedlich dimensioniert sind und damit abweichende Federkonstanten aufweisen.

Weitere Merkmale der Erfindung ergeben sich aus der Figurenbeschreibung, die ausführlich das in den Zeichnungen dargestellte Ausführungsbeispiel erläutert. Es zeigt:

Fig. 1: in einem Längsschnitt die erfindungsgemäße Mehrfachlastschaltung eingebracht in den vorderen Bereich eines Getriebegehäuses vor der Fahrkupplung,

Fig. 2: den elektrohydraulischen Schaltplan zur Beaufschlagung der Lamellenkupplungen bzw. Lamellenbremse.

Die Fig. 1 verdeutlicht die vorteilhafte, wenig Bauraum benötigende Vierfachlastschaltung, die ausgebildet als Lastschaltgetriebeeinheit 5 sich vorteilhaft eignet als eine Einschubeinheit in das Getriebegehäuse 8. In dem Ausführungsbeispiel (Fig. 1) ist das Lastschaltgetriebe in Verlängerung der Motorachse, die Antriebswelle 36 umschließend, unmittelbar dem Schwungrad 9 nachgeordnet im Getriebegehäuse 8 eingesetzt. Über das Dämpfungsglied 25, die Hohlwelle 22, die über ein Zahnprofil 23 den Antrieb auf die Antriebswelle 36 überträgt, erfolgt der Antrieb vom Antriebsmotor auf die Lastschaltgetriebeeinheit. Die kompakte Bauart unterstreichend, wird das gesamte Lastschaltgetriebe bestehend aus den Planetenstandgetrieben 10, 11 mit den dazugehörigen Lamellenbremsen 15, 16 sowie den Lamellenkupplungen 20, 21 von den zu einer Einheit mit Hilfe von Sechskantschrauben zusammengefügten Gehäuse 6, 7 umschlossen. Endseitig sind im Bereich der Antriebswelle 36 bzw. Abtriebswelle 57 die Gehäuse 6, 7 mit einer breit ausgeführten Nabe versehen, in der jeweils das Gehäuselager 46, 47 zur Lagerung der Planetenradträger 31, 32 eingebracht ist. Dieser Einbau bewirkt eine spiegelbildliche Anordnung der Planetenradträger 31, 32 zueinander, die in einer weiten axialen Erstreckung zwischen der Gehäuselager 46, 47 und einer weiteren Lagerung im Kupplungslager 55, 56 unmittelbar auf der Antriebswelle 36 bzw. Abtriebswelle 57 die Lamellenkupplung 20, 21 aufnimmt. Zur Erreichung einer kurzen Baulänge sind die Lamellenbremsen 15, 16 im gleichen Bereich radial über den Lamellenkupplungen 20, 21 angeordnet. Am freien Ende der Planetenradträger 31, 32 ist jeweils das Planetenrad 38, 39 drehbar und axial fixiert befestigt, wobei Jedes Planetenrad 38, 39 aus zwei mit unterschiedlichen Durchmessern versehenen Zahnrädern besteht, die zu einer Einheit zusammengefügt sind. Wie bereits eingangs erwähnt, erfolgt der Antrieb vom Schwungrad 9 auf die Antriebswelle 36, deren vom Schwungradlager 24 entgegengesetztes Ende als ein Zahnrad ausgebildet ist, das mit dem kleineren Zahnrad 38a des Planetenrades 38 im Eingriff steht. Abtriebsseitig ist eine vergleichbare Verbindung zwischen dem Zahnrad 39b und der Abtriebswelle 57 gegeben, die endseitig auf dem Außenumfang die Verzahnung 63 besitzt und damit eine kraftschlüssige Verbindung zum Flansch 50 herstellt, welcher im Gehäuse 6 bzw. auf der Verbindungswelle 65 durch die Lager 62, 86 abgestützt und gelagert wird. Als Verbindungs- bzw. Übertragungsglied zwischen den Planetenrädern 38, 39 dient die als Hohlwelle ausgebildete Zwischenwelle 48, die über je zwei Lagefixierungen 87 bzw. Lager 49 mit der Zwischenwand 37 verbunden ist, die durch Innensechskantschrauben 35 am Gehäuse 6 befestigt ist. Die vorliegende Schnittdarstellung verdeutlicht die unterschiedliche Wirkungsweise der Lamellenkupplung und Lamellenbremse, die mit einem Planetenradträger zusammenwirken. Im drucklosen Zustand der Lamellenkupplung ist diese gelüftet, mit Hilfe der Tellerfeder 66, 67, die ein axiales Verschieben des Ringkolbens 44, 45 bewirkt, der sich in seiner Endstellung am Planetenradträger 31, 32 anlegt, wie in uer Zeichnung dargestellt. Eine Druckbeaufschlagung der Druckräume 60, 61 durch die Anschlüsse 27, 28 und den Zuführbohrungen 33, 34 bewirkt ein Verschieben der Ringkolben 44, 45 in Richtung Tellerfeder 66, 67, wodurch in der Endlage die Kupplungslamellen 42, 43 - die im Wechsel axial verschiebbar aber drehfest mit dem Planetenradträger 31, 32 bzw. mit dem Innenring 40, 41 drehfest verbunden sind - aufeinandergepreßt werden. Durch die Betätigung uer Lamellenkupplung 20, 21 wird erreicht, daß der Planetenradträger 31, 32 mit der Drehzahl der Antriebswelle 36 bzw. der Abtriebswelle 57 umläuft, aufgrund der ständig mit diesen Wellen über die Verzahnung 12, 13 in Verbindung stehende Innenring 40, 41.

Im Gegensatz zur Lamellenkupplung 20, 21 ist die Lamellenbremse 15, 16 in der Neutralstellung (nicht druckbeaufschlagt) geschlossen aufgrund der außen am Ringkolben 51, 52 der Lamellenbremse 15, 16 angeordneten Tellerfedern 17, 18. Eine Lüftung der Bremse wird erreicht, in dem der Druckraum 68, 69 über die Anschlüsse 29, 30 mit einem Druckmittel beaufschlagt wird und dadurch der Ringkolben 51, 52 axial im Gehäuse 7 die Federkraft der Tellerfedern 17, 18 überwindend vom Außenring 58, 59, der im Gehäuse 7 lagefixiert und drehfest angeordnet ist, verschoben wird. Durch die gelüftete Lamellenbremse 15, 16 ist der Kraftschluß für die Bremslamellen 53, 54, die in der Neutralstellung (keine Druckbeaufschlagung) durch uie wechselseitige Verbindung mit dem Planetenradträger (31, 32) bzw. dem Außenring (58, 59) den Steg des Planetenstandgetriebes (10, 11) (Planetenradträger) halten, unterbrochen.


Funktionsweise der neu vorgestellten Schaltung:

Das vorgestellte Lastschaltgetriebe gemäß Fig. 1 ermöglicht 4 verschiedene Drehzahlen zwischen der Antriebswelle 36 und der Abtriebswelle 57. Erreicht wird dies durch 4 Schaltungen, bei denen jeweils die zu einem Planetenstandgetriebe gehörende Lamellenbremse bzw. Lamellenkupplung geschaltet oder gelüftet ist. Zur Erreichung der größten Übersetzung wird der Planetenradträger 31 von der Lamellenbremse 15 gebremst und damit nicht mit der Antriebswelle 36 umlaufen kann. Am Planetenradträger 32 dagegen ist durch eine elektrohydraulische Schaltung die Lamellenbremse 16 gelüftet und die Lammellenkupplung 21 eingerückt, wodurch folglich der Planetenradträger 32 mit der Drehzahl der Abtriebswelle 57 umläuft. Durch diese Schaltung erfolgt der Kraftfluß von der Antriebswelle 36 durch eine Übersetzung auf das kleinere Zahnrad 38a des aus zwei Rädern bestehenden Planetenrades 38. Vom größeren Zahnrad 38b erfolgt dann weiter eine Übersetzung auf die Zwischenwelle 48, deren Drehzahl gleich der Drehzahl der Abtriebswelle 57 ist aufgrund des blockierten Planetenrades 39, durch die Lamellenkupplung 21. Eine kleinere Übersetzung wird erreicht, in dem kein Druckraum uer Lamellenbremsen bzw. Lamellenkupplung druckbeaufschlagt wird. In diesem Fall werden beide Planetenradträger 31, 32 aufgrund der federvorgespannten Lamellenbremsen 15, 16 gehalten. Das Drehzahlverhältnis zwischen der Antriebswelle 36 und der Zwischenwelle 48 ist gleich der zuvor beschriebenen Schaltung durch die zweimalige Übersetzung. Durch den abgebremsten Planetenradträger 32 stellt sich eine Untersetzung zwischen der Zwischenwelle 48 und dem größeren Zahnkranz 39a des Planetenrades 39 ein, aufgrund der gleichen Zähnezahl zwischen dem Zahnrad 39b und der Abtriebswelle 57 bleibt die Drehzahl des Planetenrades 39 auch für die Abtriebswelle 57 bestimmend. Eine Beibehaltung der Drehzahl zwischen der Antriebs- und Abtriebswelle kann erreicht werden, indem alle Druckräume 60, 61 und 68, 69 druckbeaufschlagt werden. Damit werden die Lamellenbremsen 15, 16 gelüftet und die Lamellenkupplungen 20, 21 geschlossen. In dieser Schaltposition sind beide Planetenradträger 31, 32 drehfest mit der Antriebswelle 36 bzw. der Abtriebswelle 57 drehfest verbunden und somit der gesamte Antriebsstrang zwischen beiden Wellen. Durch eine vierte Schaltung kann eine Untersetzung erreicht werden, indem die Lamellenkupplung 20 geschaltet wird und damit die Zwischenwelle 48 mit der Antriebswellendrehzahl umläuft. Bei gleichzeitig eingerückter Lamellenbremse 16, die ein Blockieren des Planetenradträgers 32 bewirkt, kommt es zu der Untersetzung zwischen dem Rad 39a und der Zwischenwelle 48. Aufgrund der gleichen Zähnezahl zwischen der Abtriebswelle 57 und dem Rad 39b stellt sich auch eine gleiche Drehzahl ein.

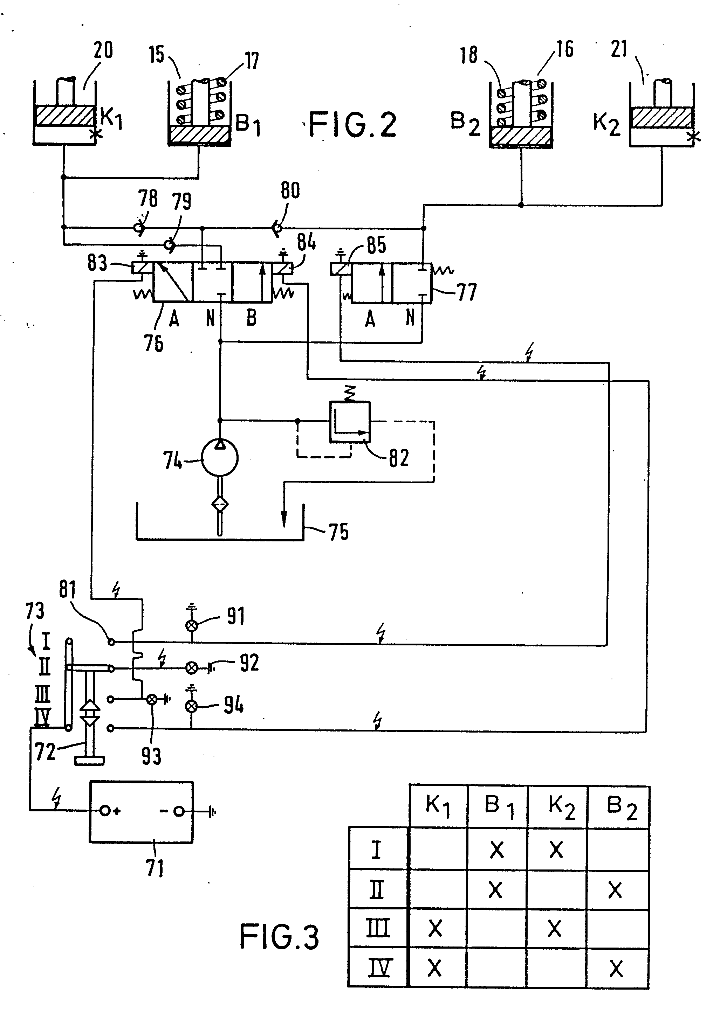

Die Fig. 2 zeigt den elektrohydraulischen Schaltplan für das erfindungsgemäße Lastschaltgetriebe. Mit Hilfe des Schalthebels 72 hat der Fahrer die Möglichkeit, verschiedene Schaltstufen 73 zu wählen, wobei jede Schaltstufe mit einer Rastung 81 versehen ist, in der jeweils eine elektrische Verbindung zwischen einer Spannungsquelle 71 und einer Schaltanzeige bzw. den elektrisch betätigten Wegeventilen hergestellt wird. In der Schaltstufe I erfolgt eine elektrische Ansteuerung des federbelasteten 2/2-Wegeventils 77, wodurch dieses von der Neutralstellung (N) in die Schaltstellung (A) verschoben wird, mit Hilfe des Elektromagneten 85. In der Schaltposition A kann dann das von der Druckpumpe 74 geförderte am Wegeventil anstehende Druckmittel ungehindert der Lamellenbremse (B2) 16 und Lamellenkupplung (K2) 21 ungehindert zuströmen und die Lamellenbremse damit Lüften bzw. Lamellenkupplung Schließen. Ein Rückschlagventil 80 verhindert, daß bei dieser Schaltung gleichzeitig die Lamellenkupplung (K1) 20 und die Lamellenbremse (B1) 15 beaufschlagt werden. Mit Hilfe der Schaltanzeige 91 erfolgt gleichzeitig eine Anzeige über die momentan eingelegte Schaltstufe. Bei einer Verschiebung des Schalthebels 72 in die Schaltstufe II wird nach vorliegendem Schaltplan gemäß Fig. 2 keines der Wegeventile angesteuert - die Lamellenkupplungen 20, 21 sind folglich gelüftet und die federkraftbeaufschlagten Lamellenbremsen 15, 16 dagegen geschlossen - . In der Schaltstufe II wird lediglich eine elektrische Verbindung zur Schaltanzeige 92 hergestellt. Bei Schaltung der Schaltstufe III wird mit Hilfe des Elektromagneten 83 das 3/3-Wegeventil 76 von (N) in die Stellung (A) verschoben und damit über entsprechende hydraulische Verbindungsleitungen alle Lamellenkupplungen und Lamellenbremsen druckbeaufschlagt. Zur Sicherstellung dieser Leitungsverbindung sind die Rückschlagventile 78, 79, 80 eingesetzt. Bei gleichzeitiger Druckbeaufschlagung aller Kupplungen und Bremsen wird ein Lüften der Lamellenbremsen 15, 16 sowie eine Schließstellung der Lamellenkupplung 20, 21 bewirkt. Durch die Schaltanzeige 93 erhält der Fahrer des Fahrzeugs den Hinweis über die momentan eingelegte Schaltstufe. In der Schaltstufe IV wird über eine entsprechende elektrische Verbindung das Elektromagnet 84 am 3/3-Wegeventil 76 angesteuert, welches das Wegeventil in die Position (B) verschiebt, wodurch die Lamellenkupplung 20 und Lamellenbremse 15 druckbeaufschlagt werden und es dadurch zu einem Lüften der Lamellenbremse und zu einer Schließstellung der Lamellenkupplung kommt. Die weitere Lamellenbremse 16 bleibt dagegen bedingt durch die Kraftbeaufschlagung der Tellerfeder geschlossen, dagegen die Lamellenkupplung 21 gelüftet.

In dem dargestellten hydraulischen Kreislauf entnimmt die Druckpumpe 74 das als Druckmittel beispielsweise vorgesehene Hydrauliköl aus dem Tank 75 und fördert es druckerhöht durch hydraulische Verbindungsleitungen zu den Wege ventilen 76, 77, an denen jeweils der Pumpendruck ansteht. In Abhängigkeit der Wegeventilstellung erfolgt eine Druckbeaufschlagung aller bzw. einzelner Lamellenkupplungen bzw. Lamellenbremsen. Bei Neutralstellung der Wegeventile wird der gesamte Förderstrom der Druckpumpe 74 über das Überdruckventil 82 zurück in den Tank 75 geleitet, bzw. zur Getriebeschmierung und Kühlung der Schaltelemente benutzt.

Aus der Fig. 3 ist in einer Übersicht in Form einer Tabelle der jeweiligen Schaltstufe (I-IV) die jeweils geschlossene Lamellenkupplung bzw. Lamellenbremse zu entnehmen. Die mit (X) gekennzeichneten Felder geben die jeweils geschlossene Lamellenkupplung bzw. Lamellenbremse an.

## Ansprüche

1. Lastschaltgetriebe, ausgelegt als unter Last schaltbares Untersetzungsgetriebe zur Schaltung von mehreren Gängen innerhalb eines Fahrzeuggetriebes, insbesondere Schleppergetriebes, das um eine mit der Antriebsbrennkraftmaschine in Verbindung stehende Antriebswelle angeordnet ist und mindestens ein Planetengetriebe umfaßt, das mit je einer Lamellenkupplung und Lamellenbremse kombiniert ist, die druckmittelbeaufschlagt schaltbar sind, dadurch gekennzeichnet, daß als Planetengetriebe zwei Planetenstandgetriebe (10, 11) zur Anwendung kommen, deren Aufbau und Abmessung zueinander gleich sind, und deren Lamellenbremsen (15, 16) federkraftbeaufschlagt ausgebildet sind.

2. Lastschaltgetriebe nach Anspruch 1, dadurch gekennzeichnet, daß die Lamellenbremsen (15, 16) mit den Lamellenkupplungen (20, 21) bei einer Druckbeaufschlagung zueinander entgegengesetzte Stellbewegungen ausführen.

3. Lastschaltgetriebe nach Anspruch 1 oder Anspruch 2, dadurch gekennzeichnet, daß die Planetenstandgetriebe (10, 11) innerhalb eines Getriebegehäuses (8) spiegelbildlich eingebracht sind.

4. Lastschaltgetriebe nach einem der vorhergehenden Ansprüche 1 bis 3, dadurch gekennzeichnet, daß die Planetenstandgetriebe (10, 11) zu einer Lastschaltgetriebeeinheit (5) zusammengefügt sind und von dem Gehäuse (6, 7) umschlossen sind.

5. Lastschaltgetriebe nach einem der vorhergehenden Ansprüche 1 bis 4, dadurch gekennzeichnet, daß die Lastschaltgetriebeeinheit (5) zwischen einem Schwungrad (9) einer Antriebsbrennkraftmaschine und einer Fahrkupplung (26) innerhalb des Getriebegehäuses (8) eingesetzt ist.

6. Lastschaltgetriebe nach einem der vorhergehenden Ansprüche 1 bis 5, dadurch gekennzeichnet, daß die Lastschaltgetriebeeinheit (5) als ein nachrüstbares Lastschaltgetriebe ausgebildet ist.

7. Lastschaltgetriebe nach einem der vorhergehenden Ansprüche 1 bis 6, dadurch gekennzeichnet, daß die Druckmittelanschlüsse (27, 28, 29, 30) zur Betätigung der Lamellenbremsen (15, 16) und der Lamellenkupplungen (20, 21) im Gehäuse (7) eingebracht sind.

8. Lastschaltgetriebe nach einem der vorhergehenden Ansprüche 1 bis 7, dadurch gekennzeichnet, daß lediglich ein Planetenstandgetriebe (10) zur Anwendung kommt.

FIG.1

EP 0 370 298 A1

KHD AG D88I51

FIG.2

FIG.3

| | K₁ | B₁ | K₂ | B₂ |
|---|---|---|---|---|
| I | | X | X | |
| II | | X | | X |
| III | X | | X | |
| IV | X | | | X |

KHD AG D88151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-245720 (GETRAG GETRIEBE- UND ZAHNRADFABRIK GMBH) <br> * Seite 6, Zeile 14 - Seite 7, Zeile 6 * | 1, 2 | F16H3/52 <br> F16H3/66 <br> B60K17/08 |
| A | * Seite 8, Zeile 18 - Seite 9, Zeile 9; Figuren 1, 3 * | 7, 8 | |
| | --- | | |
| Y | US-A-4368651 (BEDNAR) <br> * Spalte 5, Zeile 17 - Spalte 6, Zeile 9; Figuren 2, 3 * | 1, 2 | |
| A | | 4, 8 | |
| | --- | | |
| A | US-A-4649771 (ATKINSON ET AL.) <br> * Spalte 4, Zeilen 3 - 7; Anspruch 1; Figuren 1-3 * | 1, 2 | |
| | ----- | | |

| | RECHERCHIERTE . SACHGEBIETE (Int. Cl.5 ) |
|---|---|
| | F16H <br> B60K |

Der vorliegende Recherchenbericht wurde für alle Patentansprüche erstellt

| Recherchenort | Abschlußdatum der Recherche | Prüfer |
|---|---|---|
| DEN HAAG | 28 MAERZ 1990 | HELMROTH H.P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................................
& : Mitglied der gleichen Patentfamilie, übereinstimmendes
    Dokument

EPO FORM 1503 03.82 (P0403)